# EUROPÄISCHE PATENTSCHRIFT

(11) **EP 1 568 919 B1**
(45) Veröffentlichungstag und Bekanntmachung des Hinweises auf die Patenterteilung: **23.01.2008**
(21) Anmeldenummer: 05011875.1
(22) Anmeldetag: 20.06.2002
(51) Int. Cl.: F16H 57/08

(54) **Bausatz für eine Baureihe von Planetengetrieben, Planetenträger, Antrieb und Planetengetriebe**
Kit for a series of planetary gears, planet carrier and drive
Pret-à-monter pour une serié d'engrenages planetaires, portes-satellites et éntrainement

(30) Priorität: 06.07.2001 DE 10132303
(43) Veröffentlichungstag der Anmeldung: 31.08.2005
(62) Teilanmeldung aus: 02743234.3
(73) Patentinhaber: Sew-Eurodrive GmbH & Co. KG, 76646 Bruchsal (DE)
(72) Erfinder: Christ, Michael, 76689 Karlsdorf-Neuthard (DE)

(56) Entgegenhaltungen:
- EP-A- 0 738 843
- DE-A- 10 049 564
- DE-C- 19 711 423
- US-A- 5 409 430

## Beschreibung

Die Erfindung betrifft einen Bausatz für eine Baureihe von Planetengetrieben, einen Planetenträger, einen Antrieb und ein Planetengetriebe, nach dem Oberbegriff der Ansprüche 1, 17, 23 und 25.

Ein- oder mehrstufige Planetengetriebe sind in einwangiger oder zweiwangiger Ausführung bekannt. Sie umfassen mindestens einen eine Stegwange aufweisenden Planetenträger, einen oder mehrere Planeten, mindestens eine Sonne und mindestens ein Hohlrad.

Baureihen von Planetengetrieben umfassen mehrere Baugrößen, die jeweils mehrere Varianten umfassen. Dabei variieren innerhalb einer Baugröße beispielsweise Verzahnungsdaten der Verzahnungsteile. Die Baugröße an sich ist definiert über einen Parameter oder eine Menge von Parametern. Üblich sind dabei die Parameter der Achshöhe einer Welle, wie beispielsweise eintreibende oder abtreibende Welle. Alternativ oder in Kombination sind auch Definitionen der Baugröße mittels Nenn-Drehmomentwerten oder Nenn-Leistungen. Nachteilig ist dabei, dass für die vielen Varianten eine hohe Teilevielfalt notwendig ist und daher die Fertigungs- und Lagerkosten hoch sind. Insbesondere wenn ein großer Bereich von realisierbaren Übersetzungszahlen erforderlich ist müssen nicht nur die Verzahnungsdaten sondern unter Umständen auch die konstruktiven Ausführungen der Einzelkomponenten variiert werden, was die Teilevielfalt noch weiter erhöht.

Bei Antrieben oder Getrieben sind die maximal übertragbaren Drehmomente der jeweiligen Varianten berechenbar oder bestimmbar. Der Fachmann des Standes der Technik legt die Baureihe derart aus, dass die Stufung der Übersetzungszahlen möglichst viele Anwendungen der Kunden ermöglicht und die Stufung der Drehmomente den am Markt üblichen Anforderungen genügt.

Aus der gattungsgemäßen EP 0 738 843 A2 ist ein Planetengetriebe bekannt, bei dem zwei Sorten von Bohrungen für Planetenräder vorgesehen sind. Dabei kämmt die Sonne mit den Planetenrädern, die in der ersten Sorte Bohrungen vorgesehen sind und diese kämmen mit den Planetenrädern, welche in der zweiten Sorte Bohrungen vorgesehen sind. Die letztgenannten Planetenräder kämmen mit dem Hohlrad. Ein Entfernen der Planetenräder der ersten Sorte Bohrungen würde die Funktion des Getriebes verhindern. Ein Austauschen der Planetenräder in der ersten mit den Planetenrädern in der zweiten Sorte Bohrungen verändert das Getriebe nicht.

Aus der DE 197 11 423 C1 ist ein Kunststoffgetriebe bekannt, bei dem die Planetenräder auf einer ersten Sorte Zapfen oder einer zweiten Sorte Zapfen aufgesteckt werden können. Dazu ist die Wange des Planetenträgers einstückig mit den sechs Zapfen ausgeführt. Allerdings verursachen leer stehende Zapfen ein höheres Trägheitsmoment, höhere Planschverluste und höheren Materialaufwand. Darüber hinaus sind die Außenradien der Planetenräder nur bis zu einem maximalen Durchmesser vorsehbar, nach dessen Überschreitung das jeweilige Planetenrad nicht mehr auf den Zapfen der ersten Sorte aufsteckbar ist, weil es mit dem zweiten Zapfen kollidiert.

Der Erfindung liegt daher die Aufgabe zugrunde, eine Baureihe von Planetengetrieben die bei einem großen Bereich von realisierbaren Übersetzungszahlen niedrige Fertigungs- und Lagerkosten aufweist.

Erfindungsgemäß wird die Aufgabe bei dem Bausatz nach den in Anspruch 1 angegebenen Merkmalen dadurch gelöst, dass der Bausatz für eine Baureihe von Planetengetrieben vorgesehen ist, wobei die Baureihe mindestens eine Baugröße, insbesondere eine mittels einer Achshöhe der Abtriebswelle definierte, umfasst, wobei jede Baugröße mindestens zwei Varianten umfasst,
wobei das Planetengetriebe mindestens eine, zweiwangig ausgeführte Planetengetriebestufe umfasst,
wobei die Planetengetriebestufe zumindest einen, zwei Stegwangen aufweisenden Planetenträger, Planeten, Sonne und Hohlrad umfasst,
wobei Stegbolzen zur Verbindung einer Stegwange des Planetenträgers mit der zweiten Stegwange vorgesehen sind,
wobei der Planetenträger auf seinen beiden Stegwangen eine erste Sorte Bohrungen und eine zweite Sorte Bohrungen umfasst,
wobei die Bohrungen der ersten Sorte auf einem ersten Kreis mit einem ersten Radius a1 zur fiktiven Achse des Planetenträgers angeordnet sind,
und wobei die Bohrungen der zweiten Sorte auf einem zweiten Kreis mit einem zweiten Radius a2 zur fiktiven Achse des Planetenträgers angeordnet sind,
wobei innerhalb einer Baugröße
- bei einer ersten Variante Planetenbolzen in der ersten Sorte Bohrungen und Stegbolzen in der zweiten Sorte Bohrungen vorgesehen sind,
- bei einer zweiten Variante Planetenbolzen in der zweiten Sorte Bohrungen und Stegbolzen in der ersten Sorte Bohrungen vorgesehen sind,
wobei die zweite Variante aus der ersten Variante durch Vertauschen der Planetenbolzen mit den Stegbolzen ausgeführt ist.

Von Vorteil ist dabei, dass zweiwangige Ausführungen ein besonders hohes Drehoment übertragen können und eine beidseitige Lagerung der Planeten ermöglicht ist. Mit der Erfindung ist es nun sogar ermöglicht, die eigentlich konstruktiv komplexe Konstruktion der zweiwangigen Ausführung derart auszuführen, dass eine erhebliche Reduktion der Teilevielfalt erreichbar ist, ohne dass auf die Zweiwangigkeit und deren Vorteile verzichtet werden muss.

Von Vorteil ist bei der Erfindung auch, dass die Planetenbolzen auf verschiedenen Radien positionierbar sind. Somit sind verschieden Achsabstände zwischen Sonne und Planeten bei verschiedenen Varianten ausführbar. Daher ist auch der realisierbare Bereich von Übersetzungszahlen viel größer als bei nur einem Achsabstand. Da der Planetenträger bei verschiedenen Varianten verwendbar ist und die Bohrungen derart ausführbar sind, dass dieselben Bolzen bei verschiedenen Varianten einsetzbar sind, ist die Teilevielfalt der Baureihe erheblich reduzierbar und somit auch die Kosten.

Bei einer vorteilhaften Ausgestaltung ist die Stufung der maximal übertragbaren Drehmomente mehrerer Varianten in Baugrößen derart, dass das maximal übertragbare Drehmoment einer jeweiligen Variante dem maximal übertragbaren Drehmoment einer Variante einer jeweils anderen Baugröße entspricht. Von Vorteil ist dabei, dass zu einer bestehenden Variante spezielle Kundenwünsche, wie beispielsweise nach größerer Verdrehsteifigkeit bei gleich großem, maximal übertragbarem Drehmoment, insbesondere mit gleicher Übersetzungszahl, innerhalb der Baureihe erfüllbar sind, fast ohne zusätzliche Teile sondern durch Umsetzen der Planeten mit Lagern auf die Bolzen der anderen Sorte. Gegebenenfalls ist dabei besonders vorteilhaft und kostengünstig zur Durchmesseranpassung eine auf die dünneren Bolzen aufgesteckte Hülse, die je nach Variante zu verwenden oder herauszunehmen ist. Somit sind mit Ausnahme der Hülsen alle Teile, umfassend Lager für Planeten, Planeten, Sonne, Hohlrad, Planetenträger, Wangen und Bolzen wiederverwendbar.

Bei einer vorteilhaften Ausgestaltung ist der erste Radius größer als der zweite Radius. Von Vorteil ist dabei, dass bei der Variation der Verzahnungsdaten der Planeten auch möglichst große Außendurchmesser der Verzahnungen verwendbar sind.

Bei einer vorteilhaften Ausgestaltung sind auf die Stegbolzen aufgesteckte Abstandshülsen vorgesehen, die die beiden Stegwangen auf einem Abstand halten. Von Vorteil ist dabei, dass der Abstand in einer besonders kostengünstigen Art und Weise ausführbar ist.

Bei einer vorteilhaften Ausgestaltung sind die erste und/oder zweite Sorte Bohrungen exzentrisch ausgeführt. Bei einer anderen vorteilhaften Ausgestaltung sitzen die Planeten mit ihren zugehörigen Lagern auf Hülsen mit exzentrisch ausgeführter Bohrung, die auf die zylindrischen Planetenbolzen aufgesteckt sind. Von Vorteil ist dabei, dass der von den Verzahnungsdaten der Sonne, des Hohlrades und der Planeten bestimmte Achsabstand der Planeten zur Sonne sich beim Fertigen automatisch einstellt und sogar Fertigungstoleranzen ausgeglichen werden.

Bei einer vorteilhaften Ausgestaltung sind der erste und der zweite Radius gleich.

Bei einer vorteilhaften Ausgestaltung sind in einer ersten Baugröße bei mindestens einer ersten Variante Planetenbolzen in der zweiten Sorte Bohrungen und Stegbolzen in der ersten Sorte Bohrungen vorgesehen und in einer zweiten kleineren Baugröße bei mindestens einer Variante
Planetenbolzen in der ersten Sorte Bohrungen und Stegbolzen in der zweiten Sorte Bohrungen vorgesehen.

Von Vorteil ist dabei, dass bei der ersten Baureihe eine größere Verdrehsteifigkeit von Teilen, wie Abtriebswelle oder dergleichen, ausführbar ist bei gleicher Übersetzung wie in der zweiten Baureihe. Dabei wird dann zwar weniger Drehmoment maximal übertragbar, aber die Teilevielfalt und damit auch die Kosten sind einerseits stark reduziert und andererseits ist die große Verdrehsteifigkeit schnell und einfach erreichbar durch bloßes Austauschen von Stegbolzen und Planetenbolzen bei einer innerhalb der Baureihe vorhandenen Variante. Stegbolzen und Planetenbolzen haben dabei unterschiedliche Durchmesser.

Die erfinderische Aufgabe wird auch gelöst von einer Baureihe, die mehrere erfindungsgemäße Baureihen umfasst und/oder um nicht-erfindungsgemäße Varianten erweitert ist. Die genannten Vorteile der erfindungsgemäßen Baureihe bleiben. Denn auch sie gehen in eine so erweiterte Baureihe über.

Erfindungsgemäß wird die Aufgabe nach den in Anspruch 17 angegebenen Merkmalen bei dem Planetenträger dadurch gelöst, dass der Planetenträger auf seiner Stegwange eine erste Sorte Bohrungen und eine zweite Sorte Bohrungen aufweist, wobei die Bohrungen der ersten Sorte auf einem ersten Kreis mit einem ersten Radius a1 zur fiktiven Achse des Planetenträgers angeordnet sind, und die Bohrungen der zweiten Sorte auf einem zweiten Kreis mit einem zweiten Radius a2 zur fiktiven Achse des Planetenträgers angeordnet sind. Insbesondere ist der Planetenträger auch für einwangige und/oder zweiwangige Planetentgetriebestufen einsetzbar, wobei Planetenbolzen und Stegbolzen je nach Bedarf und Ausführungsart bestückbar sind. Von Vorteil ist dabei, dass ein durch Urformen oder Umformen hergestellter Planetenträger in immer derselben Art und Weise für verschiedene Varianten innerhalb einer Baureihe einsetzbar ist und somit die Fertigungskosten und Lagerkosten reduzierbar sind. Außerdem ist der Planetenträger äußerst einfach fertigbar, insbesondere weil er keine, komplizierte Geometrieen aufweisende Stegstreben umfasst.

Erfindungsgemäß wird die Aufgabe nach den in Anspruch 23 angegebenen Merkmalen bei dem Antrieb dadurch gelöst, dass die Planetengetriebestufe mindestens zweiwangig mit zwei Stegwangen ausgeführt ist und die zwei Stegwangen mittels Stegbolzen verbunden sind. Von Vorteil ist dabei, dass die Stegbolzen schnell, einfach und kostengünstig fertigbar sind und gegenüber einer Verwendung eines Planetenträgers mit Stegstreben viel weniger Material notwendig ist, was zur Kostenersparnis beiträgt. Da für die Stegbolzen nur Bohrungen vorzusehen sind entfällt die aufwendige Bearbeitung der komplizierten Geometrie der Stegstreben, die sogar mehrere Arbeitsgänge für Flächen und Zylinderteile umfasst.

Dadurch, dass die Stegbolzen auch als Planetenbolzen und umgekehrt einsetzbar sind, werden die Kosten weiter reduziert.

Bei einer vorteilhaften Ausgestaltung ist der Antrieb ein Servoantrieb, insbesondere ein spielarmer und verdrehsteifer Servoantrieb. Vorteilhaft ist dabei, dass der ein Baukasten von Servoantrieben mit großer Vielfalt unter Verwednung nur weniger Teile ausführbar ist, wobei sogar spezielle Wünsche von Kunden ausführbar sind ohne zusätzliche Teile, sondern durch bloßes Ändern des Fertigungsablaufes. Im Stand der Technik sind dafür Sonderkonstruktionen notwendig, die extrem aufwendig sind und zu langen Lieferzeiten führen. Bei dem erfindugnsgemäßen Servoantrieb ist sogar eine Baureihe ausführbar, die Varianten ergänzt um weitere Varianten mit größerer Verdrehsteifigkeit und gleichem maximal übertragbarem Drehmoment und gleicher Übersetzungszahl.

Dies ist sogar ausführbar ohne zusätzliche Teile sondern bloß durch geschickte Dimensionierung der Baureihe insgesamt, insbesondere der Stufung der maximal übertragbaren Drehmomente der Varianten. Diese Stufensprünge des maximal übertragbaren Drehmomentes sind also bestimmt von den jeweils kleineren Baugrößen. Insbesondere sind Anzahl und Durchmesser der Stegbolzen der Varianten der nächstgrößeren Baugröße entsprechend stabil ausgelegt wie Anzahl und Durchmesser der Planetenbolzen der Varianten der kleineren Baugröße.

### Bezugszeichenliste:

- 1,21,31,41: Planetenträger
- 2: Stegstrebe
- 3, 23, 43: Planet
- 4,24,44: Lager
- 5, 25, 35, 45: Planetenbolzen
- 6, 26, 36, 46: Lager für Abtrieb
- 8, 27, 28, 38, 48: Stegwange
- 32: erste Sorte Bohrungen
- 33: zweite Sorte Bohrungen
- 22, 42, 51, 52, 53, 54: Stegbolzen
- 61: Langloch
- a1, a2: Radius = Sonne-Planeten-Achsabstand

Die Erfindung wird nun anhand von Abbildungen näher erläutert:

### Abbildungsverzeichnis:

- Fig.1:: Planetengetriebe mit Stegstreben und einer Sorte von Bohrungen zur Aufnahme von Planetenbolzen
- Fig.2:: Planetengetriebe mit erster und zweiter Sorte von Bohrungen auf verschiedenen Radien a1 und a2
- Fig.3:: Planetenträger mit Bohrungen in der ISO-Ansicht
- Fig.4:: Planetengetriebe mit erster und zweiter Sorte von Bohrungen auf gleichem Radius und vier Planeten
- Fig.5a:: Planetengetriebe mit erster und zweiter Sorte von Bohrungen auf gleichem Radius und vier Planeten
- Fig. 5b:: Planetengetriebe mit geradverzahntem Stegbolzen
- Fig. 5c:: Planetengetriebe mit Schrägrändel-verzahntem Stegbolzen
- Fig. 5d:: Planetengetriebe mit Kreuzrändel-verzahntem Stegbolzen
- Fig. 5e:: Planetengetriebe mit Stegbolzen in Pressverbindung
- Fig. 6:: Langloch zur Aufnahme von Panetenbolzen

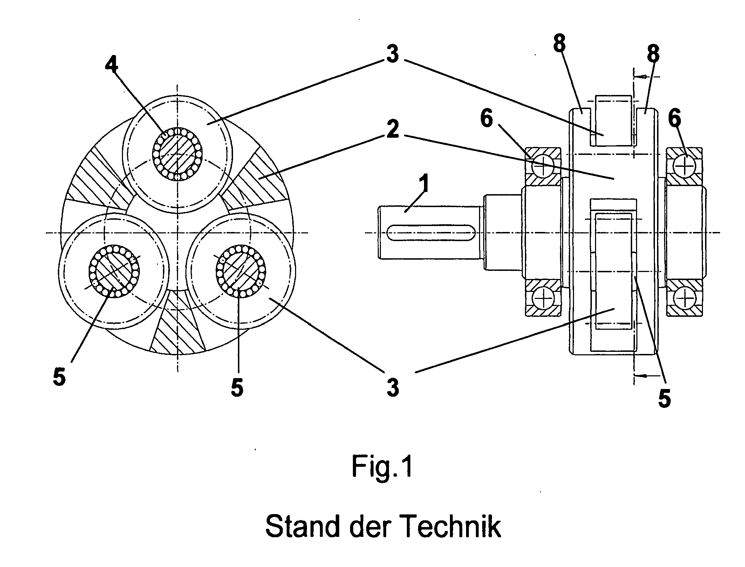

In der Figur 1 ist ein zweiwangiges Planetengetriebe nach Stand der Technik gezeigt. Der Planetenträger 1 ist zusammen mit den Stegstreben 2 aus einer Urform gefertigt. Die Stegstreben 2 haben ein großes Volumen und benötigen somit viel Material. Dadurch ist das Getriebe schwer und kostspielig.

Zwischen den Stegstreben 2 sind die Planeten 3 angeordnet, die über Lager 4 auf den Planetenbolzen 5 sitzen. Diese Planetenbolzen 5 sind in Bohrungen der ersten Stegwange 8 und der zweiten Stegwange 8 eingesteckt. Die Bohrungen für Planetenbolzen 5 liegen auf einem Kreis, der den Radius a zur fiktiven Achse, also der mathematischen Achse des Planetenträgers 1, aufweist.

Der Planetenträger 1 ist über Lager 6 im Gehäuse gelagert.

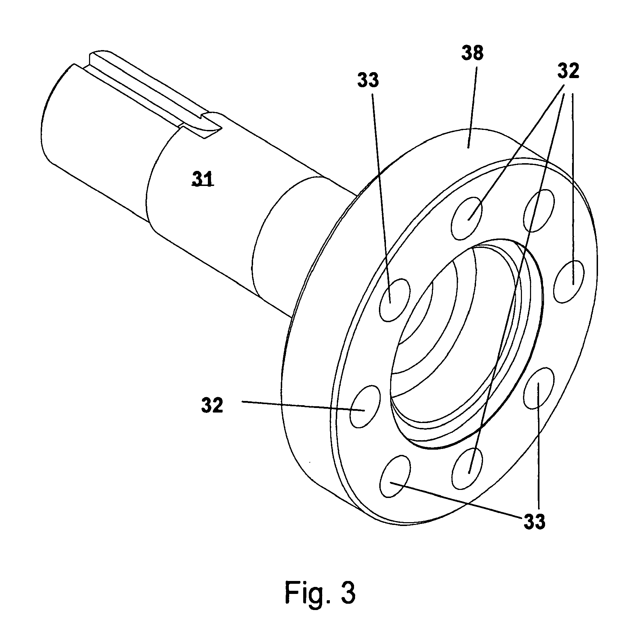

In der Figur 3 ist für ein erstes erfindungsgemäßes Ausführungsbeispiel ein Planetenträger 31 für ein ein- oder zweiwangiges Planetengetriebe gezeigt. Der Planetenträger 31 weist eine erste Wange 38 auf. Diese ist mit einer ersten Sorte Bohrungen 32 und mit einer zweiten Sorte Bohrungen 33 versehen.

Die erste Sorte Bohrungen 32 liegt auf einem Kreis mit einem ersten Radius a1 zur fiktiven Achse. Die zweite Sorte Bohrungen 33 liegt auf einem Kreis mit einem zweiten Radius a2 zur fiktiven Achse. Der zweite Radius a2 ist größer als der erste Radius a1.

Innerhalb einer Baugröße bei einer ersten Variante sind Planetenbolzen zur Bildung einer jeweiligen Achse für Planeten vorgesehen, die in die erste Sorte Bohrungen 32 eingesteckt sind. Bei einer weiteren Variante derselben Baugröße sind Planetenbolzen vorgesehen, die in die zweite Sorte Bohrungen 33 eingesteckt sind.
Da der Radius a1 der ersten Sorte Bohrungen 32 verschieden ist von dem Radius a2 der zweiten Sorte Bohrungen 33, ist bei den beiden genannten Varianten der Achsabstand von Sonne und Planeten verschieden.

Bei gegebenem Achsabstand werden innerhalb der jeweiligen Baugröße die Verzahnungen von Sonne, Planeten und Hohlrad variiert zur Erreichung verschiedener Übersetzungszahlen.

Der insgesamt innerhalb der Baugröße mit der Variation der Verzahnungen realisierbare Bereich von Übersetzungszahlen ist bei der erfindungsgemäßen Baugröße der Baureihe mit den beiden genannten Varianten größer als der Bereich, der mit nur einer Variante erzielbar wäre. Vorteiligerweise sind derselbe Planetenträger, dieselben Planetenbolzen und teilweise auch Sonne, Hohlrad oder Planeten bei beiden genannten Varianten einsetzbar. Dadurch wird die Teilevielzahl der Baureihe erheblich reduziert und somit auch die Fertigungs- und Lagerkosten. Außerdem ist im selben Gehäuse eine Variante mit Achsabstand a1 oder eine andere Variante mit Achsabstand a2 ausführbar durch bloßes Umstecken der Plantenbolzen in die andere Sorte Bohrungen.

Der Planetenträger 31 ist bei einwangigen und bei zweiwangigen Ausführungen einsetzbar. Sie stellen entweder ein erstes oder ein zweites erfindungsgemäßes Ausführungsbeispiel dar.
Dabei sind zweiwangige Ausführungen mit Stegbolzen ausführbar, die in die andere, nicht von Planetenbolzen besetzte Sorte Bohrungen einsteckbar sind.

Bei weiteren erfindungsgemäßen Ausführungsbeispielen ist der zweite Radius a2 ist kleiner als der erste Radius a1.

Ein drittes erfindungsgemäßes Ausführungsbeispiel umfasst eine Baureihe, die Varianten in einwangiger und weitere Varianten in zweiwangiger Ausführung umfasst. Somit ist der Planetenträger 31 mehrfach verwendbar bei gattungsgemäß verschiedenen Varianten.

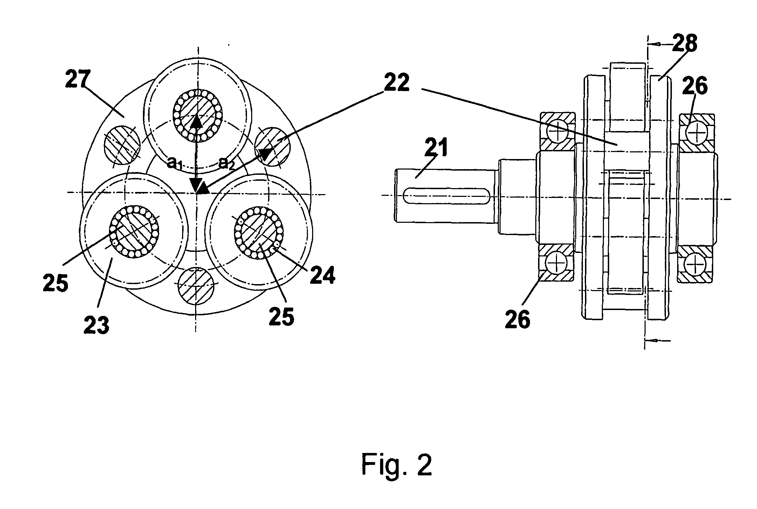

In der Figur 2 ist eine erste Variante eines erfindungsgemäßes Ausführungsbeispiel in zweiwangiger Ausführung gezeigt.

Der Planetenträger 21 weist keine Stegstreben auf sondern eine erste Stegwange 27, die mit einer ersten und mit einer zweiten Sorte Bohrungen versehen ist.

Die zweite separate Stegwange 28 weist ein entsprechendes Bohrungsbild auf. Die erste Sorte Bohrungen dient zur Aufnahme der Planetenbolzen 25, die zur Bildung einer Achse für Lager 24 mit Planeten 23 vorgesehen sind. Die Stegbolzen 22 verbinden die beiden Wangen 28 und sind in die zweite Sorte Bohrungen eingesteckt. Das Planetengetriebe ist somit materialsparender und leichter ausgeführt als ein Planetengetriebe nach Figur 1. Die in der Figur 2 gezeigten Bohrungen für Planetenbolzen 25 liegen auf einem Kreis, der den Radius a1 zur fiktiven Achse, also der mathematischen Achse des Planetenträgers, aufweist. Somit beträgt der Achsabstand zwischen Sonne und Planeten a1. Die Stegbolzen 22 liegen auf einem Kreis mit Radius a2.

Bei einer weiteren Variante der Baugröße sind die Planetenbolzen 25 und die Stegbolzen 22 vertauscht vorgesehen. Dazu sind die Bohrungen und jeweiligen Bolzen (22, 25) gleichartig und somit kompatibel ausgeführt. Somit beträgt der Achsabstand zwischen Sonne und Planeten bei dieser zweiten Variante a2. Daher lässt sich mit beiden Varianten insgesamt ein sehr weiter Bereich von Übersetzungszahlen realisieren und außerdem ist die Teilevielfalt weiter reduziert und die Kosten sind vermindert. Der Planetenträger ist über Lager 26 im Gehäuse gelagert.

Bei einem anderen erfindungsgemäßen Ausführungsbeispiel weisen die erste Sorte Bohrungen und die zweite Sorte Bohrungen den selben Radius a1 und a2 innerhalb derselben einen Baugröße auf. Jedoch ist der Durchmesser der Bohrungen der ersten und der zweiten Sorte verschieden. Die in die erste Sorte Bohrungen eingesteckten Planetenbolzen weisen einen kleineren Durchmesser auf als die in die zweite Sorte eingesteckten Stegbolzen. Somit sind nur kleine Lager für die Planeten notwendig. Diese Lager sind daher kostengünstig. Die Stegbolzen werden dicker gewählt, um eine stabile Verbindung der beiden Wangen zu gewährleisten. Zur Erzeugung der anderen Variante ist dann ein Herausnehmen der Lager für Planeten notwendig und ein Aufstecken anderer Lager für Planeten auf die nun als Planetenbolzen einsetzbaren Stegbolzen. Da der Durchmesser der Stegbolzen jedoch größer ist als der Durchmesser der Planetenbolzen der ersten Variante, sind die Lager kostspieliger. Es sind aber dieselben Planeten verwendbar. Außerdem sind in dieser Variante größere maximal übertragbare Drehmomente realisierbar,
wobei die Übersetzungszahl gleich ist. Des Weiteren ist damit der große Vorteil verbunden, innerhalb derselben Baugröße eine Variante anbieten zu können mit gleicher Übersetzungszahl und höherer Verdrehsteifigkeit. Dies ist insbesondere für Antriebe bei Holzverarbeitungsmaschinen von Vorteil, die oft eine hohe Verdrehsteifigkeit erfordern.

Außerdem ist innerhalb der Baureihe mit der letzgenannten Variante dieser Baugröße eine Möglichkeit vorhanden, spezielle Kundenforderungen zu erfüllen. Beispielsweise wünscht der Kunde zu einer Variante einer kleineren Baugröße der Baureihe ein Ergänzung mit gleicher Übersetzungszahl, gleichem maximal übertragbarem Drehmoment und größerer Verdrehsteifigkeit. Genau dies ist nun mit der beschriebenen Variante der größeren Baugröße erfüllt. Besonderes Kennzeichen der Baureihe ist dabei, dass das maximal übertragbare Drehmoment der größeren Baugröße bei derjenigen Variante, bei der Stegbolzen als Planetenbolzen eingesetzt sind, dem maximal übertragbaren Drehmoment einer Variante der kleineren Baugröße mit Planetenbolzen in der ersten Sorte Bohrungen gleicht.

Bei weiteren erfindungsgemäßen Ausführungsbeispielen sind statt dicker und dünner Bolzen nur dünne Bolzen, also Bolzen mit dem Durchmesser der kleinsten Bohrung innerhalb der Baugröße oder Baureihe vorgesehen. Zur Erzeugung dicker Bolzen werden auf die dünnen Bolzen aufgesteckte Hülsen verwendet. Insbesondere bei einwangigen ausführungen sind damit große Einsparungen erzielbar bei Kosten, wie Lagerkosten und Fertigungskosten.

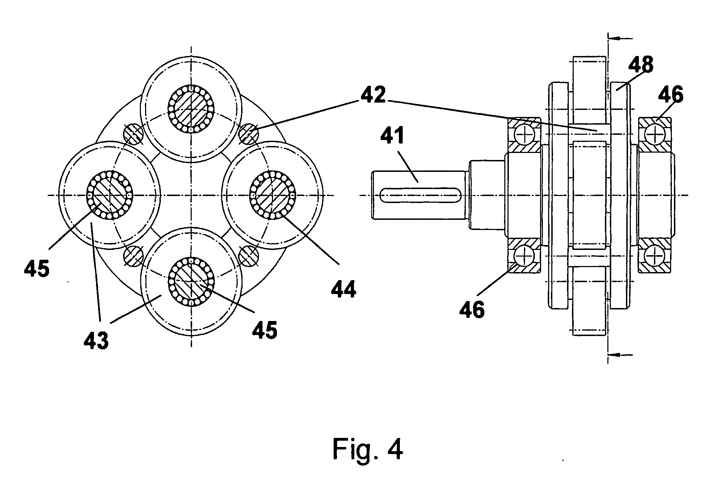

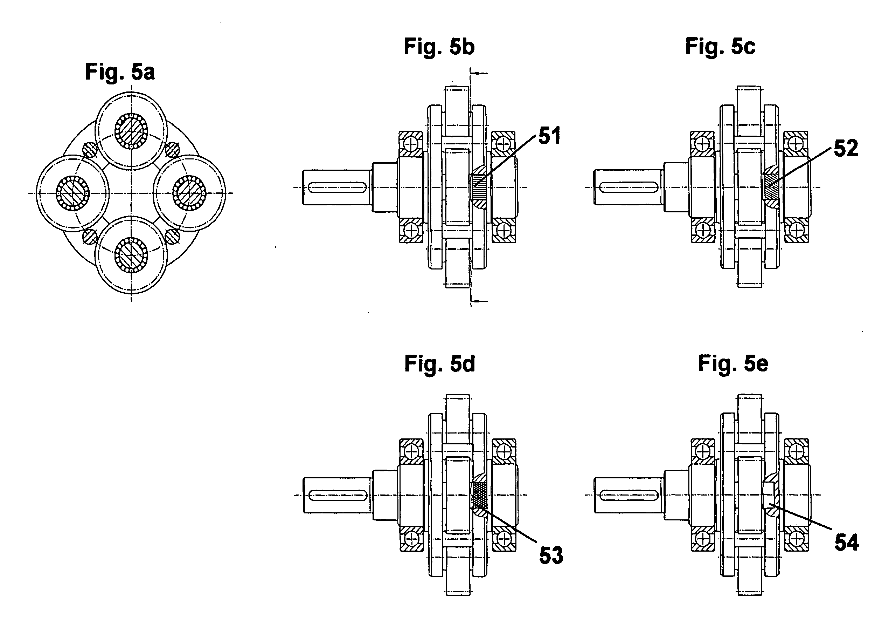

In der Figur 4 und 5a sind erfindungsgemäße Ausführungsbeispiele gezeigt, die statt drei Planeten und Stegbolzen vier aufweisen.

Die Figuren 5b bis 5e zeigen verschiedene erfindungsgemäße Ausführungsbeispiele.

In der Figur 5b ist die Verbindungsart zwischen dem Stegbolzen 51 und der weiteren Wange verdeutlicht. Dabei ist der Stegbolzen zumindest an seinem wangenseitigen Ende geradverzahnt und wird bei der Fertigung in die Stegwange eingepresst.

In der Figur 5c ist der Stegbolzen 52 an seinem wangenseitigen Ende mit einem Schrägrändel versehen und wird beim Fertigen eingepresst unter gleichzeitigem Drehen.

In der Figur 5d ist der Stegbolzen 53 mit einem Kreuzrändel versehen und wird ebenfalls entsprechend eingepresst.

Die Figuren 5b bis 5d stellen also eine formschlüssige Verbindung dar, die eine hohe Tragfähigkeit aufweist.

In der Figur 5e weist die weitere Stegwange ein Sackloch auf, mit dem der zylindrisch ausgeführte Stegbolzen 54 mittels einer Pressverbindung verbunden ist.

Bei weiteren erfindungsgemäßen Ausführungsbeispielen sind auch andere Verbindungen verwendbar, wie beispielsweise konisch ausgeführte Stegbolzen mit einer entsprechend geformten Ausnehmung in der Stegwange. Auch Stegbolzen mit Längsrändel sind verwendbar. Weitere vorteilhafte Verbindungen sind auch Schraubverbindungen, Klebeverbindungen oder Kombinationen von genannten Verbindungen.

Bei weiteren erfindungsgemäßen Ausführungsbeispielen sind Stegbolzen und/oder Planetenbolzen und Stegwange aus einem Guss, also einer Urform, hergestellt.

Bei weiteren erfindungsgemäßen Ausführungsbeispielen sind auf die Stegbolzen (22, 42) Abstandshülsen gesteckt, wobei auch Exzenterhülsen verwendbar sind.

Bei weiteren erfindungsgemäßen Ausführungsbeispielen sind die Lager der Planeten auf Exzenterhülsen aufgesteckt, die auf Planetenbolzen gesteckt sind. Somit stellt sich beim Zusammenfügen der Achsabstand der Planeten zur Sonne automatisch ein und es werden sogar Fertigungsfehler hervorragend ausgeglichen.

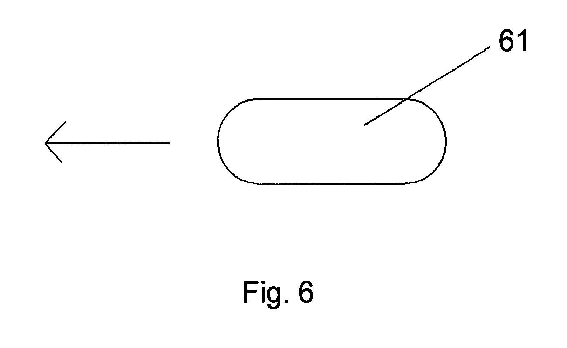

Bei weiteren erfindungsgemäßen Ausführungsbeispielen sind die Bohrungen in den Stegwangen als Langloch 61 ausgeführt, das in radialer Richtung zur Achse der Sonne orientiert ist. Eines der Langlöcher 61 ist in Figur 6 schematisch gezeigt. Die Orientierungsrichtung ist mit einem Pfeil angedeutet. Das Langloch dient anstatt von Rundbohrungen zur Aufnahme von Panetenbolzen. Die Planetenbolzen sind zylindrisch ausgeführt. Beim Fertigen werden die Planentenbolzen in die Langlöcher eingeführt und es stellt sich dann auch auf diese Weise der von den Verzahnungsdaten der Planeten, der Sonne und des Hohlrades bestimmte Achsabstand ein. Toleranzen der Teile werden automatisch ausgeglichen.

Von der Erfindung sind auch Baureihen umfasst, die Kombinationen von einer oder mehrerer beschriebenen erfindungsgemäßen Baugrößen mit Varianten umfassen. Des Weiteren umfasst die Erfindung Baureihen, die nicht nur die beschriebenen erfindungsgemäßen Varianten umfassen sondern auch andere Getriebestufen.

Bei weiteren erfindungsgemäßen Ausführungsbeispielen ist der Radius a1 der ersten Sorte Bohrungen und der Radius a2 der zweiten Sorte Bohrungen gleich und die Anzahl aller Bohrlöcher auf der Stegwange des Planetenträgers weist zwei oder mehr Primfaktoren auf. Beispielsweise ist diese Anzahl 12 = 4 x 3. Somit sind mit dem selben Planetenträger entweder eine Planetengetriebestufe mit drei Planetenbolzen und drei Stegbolzen ausführbar oder eine Planetengetriebestufe mit vier Planetenbolzen und vier bis acht Stegbolzen ausführbar. Insbesondere ist der Winkel-Abstand zwischen den Planeten- und/oder Stegbolzen gleichmäßig ausführbar, also beispielsweise sind die Planetenbolzen mit einem Winkel von 120° zueinander bei drei Planetenbolzen oder mit einem Winkel von 90° zueinander bei vier Planetenbolzen anordenbar. Je nach Positionierung und Dimensionierung der Bohrungen lassen sich auch andere, vorteilhafterweise mehrfach verwendbare Planetenträger fertigen.

Bei anderen erfindungsgemäßen Ausführungsbeispielen ist der Radius a1 der ersten Sorte Bohrungen vom Radius a2 der zweiten Sorte Bohrungen verschieden. Je nach
Positionierung und Dimensionierung der Bohrungen lassen sich auch hierbei andere vorteilhaft mehrfach verwendbare Planetenträger fertigen für Planetengetriebestufen mit verschiedenen Anzahlen von Planetenbolzen und/oder Stegbolzen.

Bei anderen erfindungsgemäßen Ausführungsbeispielen umfasst der Bausatz für die Baureihe einen Planetenträger, in dessen Bohrungen der ersten oder zweiten Sorte die Planetenbolzen eingepresst sind, also mittels Presspassung verbunden sind. Insbesondere sind dabei die Stegbolzen entbehrlich, wenn die Planetenbolzen entsprechend dimensioniert, ausgeführt und verbunden sind.

Bei weiteren erfindungsgemäßen Ausführungsbeispielen sind die vorgenannten Bohrungen für die Stegbolzen weggelassen, wodurch Kosten einsparbar sind. Der Bausatz umfasst bei einer Baugröße aber, wie oben ausführlich geschildert, einen ersten Planetenträger mit nur der ersten Sorte Bohrungen und einen weiteren Planetenträger mit nur der zweiten Sorte Bohrungen. Somit umfasst dann der Bausatz Planetenträger, die zwar nur zum Verbinden, insbesondere Einpressen, mit Planentenbolzen vorgesehen sind, aber je nach Variante ist ein entsprechend verschiedener Achsabstand a1 oder a2 bei den Planetenbolzen realisierbar.

Durch das Weglassen von Stegbolzen ergibt sich außerdem ein Platzvorteil, wodurch bei jeder der genannten Varianten drei Übersetzungen oder sogar mehr sich realisieren lassen, da die Verzahnungsdaten entsprechend abänderbar sind. Dies ist ebenfalls ein wesentliches Merkmal der gesamten Baureihe.

In Weiterbildung umfasst der Bausatz auch die vorgenannten Planetenträger mit zwei Sorten von Bohrungen. Somit ist noch eine größere Variationsmöglichkeit zugänglich, ohne dass die Teilezahl zu erhöhen ist.

Bei anderen erfindungsgemäßen Ausführungsbeispielen werden nicht nur zwei Bohrungsbilder, also die zwei genannten Sorten von Bohrungen, in der Stegwange (27,38) vorgesehen, sondern mindestens drei Bohrungsbilder. Davon ist das erste Bohrungsbild durch Planetenbolzen besetzbar und die restlichen sind mit Stegbolzen besetzbar oder können auch zumindest teilweise je nach erforderlicher mechanischer Stabilität unbesetzt bleiben. Somit ist eine hohe Steifigkeit und mechanische Stabilität erreichbar. Darüber hinaus können Planetenbolzen entweder in das zweite, dritte oder weitere Bohrungsbild eingesetzt werden. Auf diese Weise ist eine große Variantenanzahl ohne wesentliche Teilezahlerhöhung kostengünstig herstellbar, wobei eine enorma mechanische Stabilität erreicbar ist.

Bei weiteren erfindungsgemäßen Ausführungsbeispielen umfasst das Bohrungsbild für die Planetenbolzen 4 oder 5 Bohrungen. Bei großen Getriebeausführungen, insbesondere Industriegetriebeausführungen, sind sogar 6 oder mehr Bohrungen für Planetenbolzen vorteilhaft. Mit zunehmender Anzahl von Planeten ist ein größeres Drehmoment übertragbar. Außerdem lassen sich mit größeren Anzahl von Bohrungen pro Bohrungsbild insgesamt noch mehr Varianten ohne zusätzliche Bauteile erzeugen.

## Patentansprüche

1. Bausatz für eine Baureihe von Planetengetrieben, wobei die Baureihe mindestens eine Baugröße, insbesondere eine mittels einer Achshöhe der Abtriebswelle definierte, umfasst,
wobei jede Baugröße mindestens zwei Varianten umfasst,
wobei das Planetengetriebe mindestens eine, zweiwangig ausgeführte Planetengetriebestufe umfasst,
wobei die Planetengetriebestufe zumindest einen, zwei Stegwangen (8,27,28,38,48) aufweisenden Planetenträger (1,21,31,41), Planeten (3,23,43), Sonne und Hohlrad umfasst,
wobei Stegbolzen (22, 42, 51, 52, 53, 54) zur Verbindung einer Stegwange (27,38) des Planetenträgers (1,21,31,41) mit der zweiten Stegwange (8,28,48) vorgesehen sind,
wobei der Planetenträger (1,21,31,41) auf seinen beiden Stegwangen (27,38) eine erste Sorte (32) Bohrungen und eine zweite Sorte (33) Bohrungen umfasst,
wobei die Bohrungen der ersten Sorte (32) auf einem ersten Kreis mit einem ersten Radius a1 zur fiktiven Achse des Planetenträgers (1,21,31,41) angeordnet sind,
und wobei die Bohrungen der zweiten Sorte (33) auf einem zweiten Kreis mit einem zweiten Radius a2 zur fiktiven Achse des Planetenträgers (1,21,31,41)angeordnet sind,
**dadurch gekennzeichnet, dass**
innerhalb einer Baugröße
- bei einer ersten Variante Planetenbolzen (5,25,35,45) in der ersten Sorte (32) Bohrungen und Stegbolzen (22, 42, 51, 52, 53, 54) in der zweiten Sorte (33) Bohrungen vorgesehen sind,
- bei einer zweiten Variante Planetenbolzen (5,25,35,45) in der zweiten Sorte (33) Bohrungen und Stegbolzen (22, 42, 51, 52, 53, 54) in der ersten Sorte (32) Bohrungen vorgesehen sind,
wobei die zweite Variante aus der ersten Variante durch Vertauschen der Planetenbolzen mit den Stegbolzen ausgeführt ist.

2. Bausatz nach Anspruch 1,
**dadurch gekennzeichnet, dass**
der erste Radius a1 und der zweite Radius a2 gleich sind.

3. Bausatz nach Anspruch 2,
**dadurch gekennzeichnet, dass**
erste Sorte Bohrungen und zweite Sorte Bohrungen unterschiedliche Bohrungsdurchmesser aufweisen.

4. Bausatz nach Anspruch 3,
**dadurch gekennzeichnet, dass**
Stegbolzen (22, 42, 51, 52, 53, 54) und Planetenbolzen (5,25,35,45) unterschiedliche Durchmesser haben entsprechend den Bohrungsdurchmessern
oder
Stegbolzen (22, 42, 51, 52, 53, 54) und Planetenbolzen (5,25,35,45) denselben Durchmesser haben und entweder auf den Stegbolzen (22, 42, 51, 52, 53, 54) oder auf den Planetenbolzen (5,25,35,45) Hülsen zur Erzeugung größerer Außendurchmesser aufgesteckt sind.

5. Bausatz nach mindestens einem der Ansprüche 3 bis 4,
**dadurch gekennzeichnet, dass**
in einer ersten Baugröße bei mindestens einer ersten Variante Planetenbolzen (5,25,35,45) in der zweiten Sorte Bohrungen und Stegbolzen (22, 42, 51, 52, 53, 54) in der ersten Sorte Bohrungen vorgesehen sind,
und dass
in einer zweiten kleineren Baugröße bei mindestens einer Variante Planetenbolzen (5,25,35,45) in der ersten Sorte Bohrungen und Stegbolzen (22, 42, 51, 52, 53, 54) in der zweiten Sorte Bohrungen vorgesehen sind, insbesondere zum Erreichen von größerer Verdrehsteifigkeit bei gleicher Übersetzung und größerem maximal übertragbarem Drehmoment.

6. Bausatz nach mindestens einem der Ansprüche 3 bis 5,
**dadurch gekennzeichnet, dass**
in einer ersten Baugröße bei mindestens einer ersten Variante Planetenbolzen (5,25,35,45) in der zweiten Sorte Bohrungen und Stegbolzen (22, 42, 51, 52, 53, 54) in der ersten Sorte Bohrungen vorgesehen sind,
und dass
in derselben Baugröße bei mindestens einer Variante Planetenbolzen (5,25,35,45) in der ersten Sorte Bohrungen und Stegbolzen (22, 42, 51, 52, 53, 54) in der zweiten Sorte Bohrungen vorgesehen sind, insbesondere zum Erreichen von größerer Verdrehsteifigkeit bei gleicher Übersetzung und größerem maximal übertragbarem Drehmoment.

7. Bausatz nach mindestens einem der vorangegangenen Ansprüche,
**dadurch gekennzeichnet, dass**
die Baureihe eine erste und eine zweite Baugröße umfasst,
wobei die erste Baugröße eine erste Variante mit Planetenbolzen (5,25,35,45) in einer ersten Sorte Bohrungen und eine zweite Variante mit Planetenbolzen (5,25,35,45) in einer zweiten Sorte Bohrungen umfasst,
und wobei die zweite Baugröße mindestens eine dritte Variante umfasst,
und wobei das maximal übertragbare Drehmoment der zweiten Variante dem der dritten Variante gleicht.

8. Bausatz nach mindestens einem der vorangegangenen Ansprüche,
**dadurch gekennzeichnet, dass**
die Stufung der maximal übertragbaren Drehmomente mehrerer Varianten in Baugrößen derart ist, dass das maximal übertragbare Drehmoment einer jeweiligen Variante dem maximal übertragbaren Drehmoment einer Variante einer jeweils anderen Baugröße entspricht.

9. Bausatz nach Anspruch 1,
**dadurch gekennzeichnet, dass**
der erste Radius a1 größer oder kleiner ist als der zweite Radius a2.

10. Bausatz nach mindestens einem der vorangegangenen Ansprüche,
**dadurch gekennzeichnet, dass**
auf die Stegbolzen (22, 42, 51, 52, 53, 54) aufgesteckte Abstandshülsen vorgesehen sind, die die beiden Stegwangen auf einem Abstand halten.

11. Bausatz nach mindestens einem der vorangegangenen Ansprüche,
**dadurch gekennzeichnet, dass**
die erste (32) und/oder zweite Sorte (33) Bohrungen exzentrisch ausgeführt sind.

12. Bausatz nach mindestens einem der vorangegangenen Ansprüche,
**dadurch gekennzeichnet, dass**
die Planeten (3,23,43) mit ihren zugehörigen Lagern auf Hülsen mit exzentrisch ausgeführter Bohrung sitzen, die auf die zylindrischen Planetenbolzen (5,25,35,45) aufgesteckt sind.

13. Bausatz nach mindestens einem der vorangegangenen Ansprüche,
**dadurch gekennzeichnet, dass**
auf die dünneren Bolzen aufgesteckte Hülsen vorgesehen sind, die zur Durchmesseranpassung je nach Variante verwendbar oder herausnehmbar sind, insbesondere zum Herstellen anderer Varianten unter Verwendung derselben Komponenten, wie Lager für Planeten (3,23,43), Planeten, Sonne, Hohlrad, Planetenträger (1,21,31,41), Wangen und Bolzen, mit Ausnahme der Hülsen.

14. Bausatz nach mindestens einem der vorangegangenen Ansprüche,
**dadurch gekennzeichnet, dass**
außer erster und zweiter Sorte von Bohrungen eine oder mehrere weitere Sorten von Bohrungen vorgesehen sind, insbesondere mit verschiedenen Durchmessern und/oder verschiedenen Radien.

15. Bausatz nach mindestens einem der vorangegangenen Ansprüche,
**dadurch gekennzeichnet, dass**
die Planetenbolzen mittels Presspassung mit dem Planetenträger verbunden sind, also in eine Sorte Bohrungen eingepresst sind.

16. Bausatz nach mindestens einem der vorangegangenen Ansprüche,
**dadurch gekennzeichnet, dass**
die erste Sorte Bohrungen und eine weitere Sorte Bohrungen, wie zweite Sorte oder dergleichen, mindestens eine Bohrung gemeinsam verwenden, insbesondere bei gleichem jeweils zugeordneten Radius.

17. Planetenträger für Baureihe von Planetengetrieben nach Anspruch 1,
**dadurch gekennzeichnet, dass**
der Planetenträger auf seiner Stegwange (27,38) eine erste Sorte (32) Bohrungen und eine zweite Sorte (33) Bohrungen aufweist,
wobei die Bohrungen der ersten Sorte (32) auf einem ersten Kreis mit einem ersten Radius a1 zur fiktiven Achse des Planetenträgers (1,21,31,41) angeordnet sind,
und die Bohrungen der zweiten Sorte (33) auf einem zweiten Kreis mit einem zweiten Radius a2 zur fiktiven Achse des Planetenträgers (1,21,31,41)angeordnet sind.

18. Planetenträger nach Anspruch 17,
**dadurch gekennzeichnet, dass**
der Planetenträger für einwangige und/oder zweiwangige Planetengetriebestufen einsetzbar ist.

19. Planetenträger nach mindestens einem der vorangegangenen Ansprüche,
**dadurch gekennzeichnet, dass**
in einer einwangigen Planetentgetriebestufe die erste Sorte Bohrungen oder die zweite Sorte Bohrungen mit Planetenbolzen bestückt ist.

20. Planetenträger nach mindestens einem der vorangegangenen Ansprüche,
**dadurch gekennzeichnet, dass**
in einer zweiwangigen Planetentgetriebestufe die erste Sorte Bohrungen oder die zweite Sorte Bohrungen mit Planetenbolzen bestückt ist und die jeweils andere Sorte Bohrungen mit Stegbolzen zur Verbindung zweier Stegwangen besetzt ist.

21. Planetenträger nach mindestens einem der vorangegangenen Ansprüche,
**dadurch gekennzeichnet, dass**
die zur Aufnahme der Planetenbolzen vorgesehenen Ausnehmungen in den Stegwangen als Langlöcher ausgeführt sind, die in radialer Richtung zur Achse der Sonne hin orientiert sind.

22. Planetenträger nach mindestens einem der vorangegangenen Ansprüche,
**dadurch gekennzeichnet, dass**
die Planetenbolzen mittels Presspassung mit dem Planetenträger verbunden sind, also in eine Sorte Bohrungen eingepresst sind.

23. Antrieb,
umfassend Motor, insbesondere Elektromotor, und Getriebe,
**dadurch gekennzeichnet, daß**
das Getriebe eine Planetengetriebestufe nach Anspruch 1 umfasst.

24. Antrieb nach Anspruch 23,
**dadurch gekennzeichnet, dass**
der Antrieb ein Servoantrieb, insbesondere ein spielarmer und verdrehsteifer Servoantrieb, ist.

25. Planetengetriebe,
wobei das Planetengetriebe eine Planetengetriebestufe nach Anspruch 1 umfasst.

## Claims

1. A kit for a series of planetary gear units, the series including at least one size, particularly a size defined by means of an axial height of the output shaft, each size including at least two variants,
wherein the planetary gear unit includes at least one planetary gear stage of double side-plate design,
wherein the planetary gear stage includes at least one planet carrier (1, 21, 31, 41) comprising two cage side-plates (8, 27, 28, 38, 48), planets (3, 23, 43), sun and internal ring gear,
wherein cage pins (22, 42, 51, 52, 53, 54) are provided to connect one cage side-plate (27, 28) of the planet carrier (1, 21, 31, 41) to the second cage side-plate (8, 28, 48),
wherein the planet carrier (1, 21, 31, 41) includes on its two cage side-plates (27, 28) a first type (32) of bores and a second type (33) of bores,
wherein the bores of the first type (32) are arranged on a first circle with a first radius a1 relative to the hypothetical axis of the planet carrier (1, 21, 31, 41),
and wherein the bores of the second type (33) are arranged on a second circle with a second radius a2 relative to the hypothetical axis of the planet carrier (1, 21, 31, 41),
**characterised in that**
within one size
- in a first variant planet pins (5, 25, 35, 45) are provided in the first type (32) of bores and cage pins (22, 42, 51, 52, 53, 54) are provided in the second type (33) of bores,
- in a second variant planet pins (5, 25, 35, 45) are provided in the second type (33) of bores and cage pins (22, 42, 51, 52, 53, 54) are provided in the first type (32) of bores,
the second variant being created from the first variant by exchanging the planet pins with the cage pins.

2. A kit according to Claim 1,
**characterised in that**
the first radius a1 and the second radius a2 are identical.

3. A kit according to Claim 2,
**characterised in that**
a first type of bores and a second type of bores have different bore diameters.

4. A kit according to Claim 3,
**characterised in that**
the cage pins (22, 42, 51, 52, 53, 54) and the planet pins (5, 25, 35, 45) have different diameters corresponding to the bore diameters
or
the cage pins (22, 42, 51, 52, 53, 54) and the planet pins (5, 25, 35, 45) have the same diameter, and sleeves are mounted either onto the cage pins (22, 42, 51, 52, 53, 54) or onto the planet pins (5, 25, 35, 45) to produce larger external diameters.

5. A kit according to at least one of Claims 3 to 4,
**characterised in that**
in a first size in the case of at least a first variant
planet pins (5, 25, 35, 45) are provided in the second type of bores and cage pins (22, 42, 51, 52, 53, 54) are provided in the first type of bores,
and **in that**
in a second, smaller size in the case of at least one variant
planet pins (5, 25, 35, 45) are provided in the first type of bores and cage pins (22, 42, 51, 52, 53, 54) are provided in the second type of bores, particularly to achieve greater torsional rigidity with the same transmission ratio and greater maximum transmissible torque.

6. A kit according to at least one of Claims 3 to 5,
**characterised in that**
in a first size in the case of at least a first variant
planet pins (5, 25, 35, 45) are provided in the second type of bores and cage pins (22, 42, 51, 52, 53, 54) are provided in the first type of bores,
and **in that**
in the same size in the case of at least one variant
planet pins (5, 25, 35, 45) are provided in the first type of bores and cage pins (22, 42, 51, 52, 53, 54) are provided in the second type of bores, particularly to achieve greater torsional rigidity with the same transmission ratio and greater maximum transmissible torque.

7. A kit according to at least one of the preceding claims,
**characterised in that**
the series includes a first and a second size,
the first size including a first variant with planet pins (5, 25, 35, 45) in a first type of bores and a second variant with planet pins (5, 25, 35, 45) in a second type of bores, and the second size comprising at least a third variant,
and the maximum transmissible torque of the second variant being the same as that of the third variant.

8. A kit according to at least one of the preceding claims,
**characterised in that**
the graduation of the maximum transmissible torques of several variants in sizes is such that the maximum transmissible torque of a particular variant corresponds to the maximum transmissible torque of a variant of a respective other size.

9. A kit according to Claim 1,
**characterised in that**
the first radius a1 is larger or smaller than the second radius a2.

10. A kit according to at least one of the preceding claims,
**characterised in that**
spacer sleeves fitted onto the cage pins (22, 42, 51, 52, 53, 54) are provided which hold the two cage side-plates so as to be spaced apart.

11. A kit according to at least one of the preceding claims,
**characterised in that**
the first (32) and/or second type (33) of bores are of eccentric design.

12. A kit according to at least one of the preceding claims,
**characterised in that**
the planets (3, 23, 43) are seated with their associated bearings on sleeves with a bore of eccentric design, which sleeves are fitted onto the cylindrical planet pins (5, 25, 35, 45).

13. A kit according to at least one of the preceding claims,
**characterised in that**
sleeves fitted onto the thinner pins are provided, which sleeves may be used or taken off for diameter adaptation depending on the variant, particularly for producing other variants using the same components, such as bearings for planets (3, 23, 43), planets, sun, internal ring gear, planet carrier (1, 21, 31, 41), side-plates and pins, with the exception of the sleeves.

14. A kit according to at least one of the preceding claims,
**characterised in that**,
besides the first and second type of bores, one or more further types of bores are provided, particularly with different diameters and/or different radii.

15. A kit according to at least one of the preceding claims,
**characterised in that**
the planet pins are connected by means of press-fit to the planet carrier, thus are pressed into one type of bores.

16. A kit according to at least one of the preceding claims,
**characterised in that**
the first type of bores and a further type of bores, such as the second type or the like, jointly use at least one bore, particularly with the same radius associated with each.

17. A planet carrier for a series of planetary gear units according to Claim 1,
**characterised in that**
the planet carrier comprises on its cage side-plate (27, 28) a first type (32) of bores and a second type (33) of bores,
wherein the bores of the first type (32) are arranged on a first circle with a first radius a1 relative to the hypothetical axis of the planet carrier (1, 21, 31, 41),
and the bores of the second type (33) are arranged on a second circle with a second radius a2 relative to the hypothetical axis of the planet carrier (1, 21, 31, 41).

18. A planet carrier according to Claim 17,
**characterised in that**
the planet carrier may be used for single side-plate and/or double side-plate planetary gear stages.

19. A planet carrier according to at least one of the preceding claims,
**characterised in that**
in a single side-plate planetary gear stage the first type of bores or the second type of bores is fitted with planet pins.

20. A planet carrier according to at least one of the preceding claims,
**characterised in that**
in a double side-plate planetary gear stage the first type of bores or the second type of bores is fitted with planet pins and the respective other type of bores is occupied by cage pins for connecting the two cage side-plates.

21. A planet carrier according to at least one of the preceding claims,
**characterised in that**
the recesses in the cage side-plates provided to receive the planet pins are in the form of slots which are oriented in the radial direction towards the axis of the sun.

22. A planet carrier according to at least one of the preceding claims,
**characterised in that**
the planet pins are connected by means of press-fit to the planet carrier, thus are pressed into one type of bores.

23. A drive,
comprising a motor, particularly an electric motor, and a gear unit,
**characterised in that**
the gear unit includes a planetary gear stage according to Claim 1.

24. A drive according to Claim 23,
**characterised in that**
the drive is a servo drive, particularly a low-backlash and torsionally rigid servo drive.

25. A planetary gear unit,
wherein the planetary gear unit includes a planetary gear stage according to Claim 1.

## Revendications

1. Kit de pièces détachées pour une série d'engrenages planétaires, la série comportant au moins une taille de construction, en particulier une taille de construction définie au moyen d'une hauteur d'axe de l'arbre de sortie, chaque taille de construction comportant au moins deux variantes,
l'engrenage planétaire comportant au moins un étage d'engrenage planétaire réalisé à deux joues,
l'étage d'engrenage planétaire comportant au moins une cage de transmission planétaire (1, 21, 31, 41) présentant deux joues de bride (8, 27, 28, 38, 48), des planètes (3, 23, 43), un soleil et une couronne de train planétaire,
des boulons de bride (22, 42, 51, 52, 53, 54) étant prévus pour relier une joue de bride (27, 38) de la cage de transmission planétaire (1, 21, 31, 41) à la deuxième joue de bride (8, 28, 48),
la cage de transmission planétaire (1, 21, 31, 41) comportant sur ses deux joues de bride (27, 38) un premier type (32) de perçages et un deuxième type (33) de perçages,
les perçages du premier type (32) étant disposés sur un premier cercle avec un premier rayon a1 par rapport à l'axe fictif de la cage de transmission planétaire (1, 21, 31, 41)
et les perçages du deuxième type (33) étant disposés sur un deuxième cercle avec un deuxième rayon a2 par rapport à l'axe fictif de la cage de transmission planétaire (1, 21, 31, 41),
**caractérisé en ce**
**qu'**à l'intérieur d'une taille de construction
- des boulons planétaires (5, 25, 35, 45) sont prévus dans le premier type (32) de perçages et des boulons de bride (22, 42, 51, 52, 53, 54) dans le deuxième type (33) de perçages dans le cas d'une première variante,
- des boulons planétaires (5, 25, 35, 45) sont prévus dans le deuxième type (33) de perçages et des boulons de bride (22, 42, 51, 52, 53, 54) dans le premier type (32) de perçages dans le cas d'une deuxième variante,
la deuxième variante étant réalisée à partir de la première variante en intervertissant les boulons planétaires et les boulons de bride.

2. Kit selon la revendication 1,
**caractérisé en ce que**
le premier rayon a1 et le deuxième rayon a2 sont identiques.

3. Kit selon la revendication 2,
**caractérisé en ce**
**que** le premier type de perçages et le deuxième type de perçages présentent des diamètres de perçages différents.

4. Kit selon la revendication 3;
**caractérisé en ce que**
des boulons de bride (22, 42, 51, 52, 53, 54) et les boulons planétaires (5, 25, 35, 45) ont des diamètres différents en fonction des diamètres de perçages
ou **en ce que**
des boulons de bride (22, 42, 51, 52, 53, 54) et des boulons planétaires (5, 25, 35, 45) ont le même diamètre et **en ce que** des douilles sont emboîtées soit sur les boulons de bride (22, 42, 51, 52, 53, 54) ou sur les boulons planétaires (5, 25, 35, 45) pour générer des diamètres extérieurs plus grands.

5. Kit selon au moins l'une quelconque des revendications 3 à 4,
**caractérisé en ce que**,
dans une première taille de construction, dans le cadre au moins d'une première variante
des boulons planétaires (5, 25, 35, 45) sont prévus dans le deuxième type de perçages et des boulons de bride (22, 42, 51, 52, 53, 54) dans le premier type de perçages,
et **en ce que**
dans une deuxième taille de construction plus petite, dans le cadre au moins d'une variante
des boulons planétaires (5, 25, 35, 45) sont prévus dans le premier type de perçages et des boulons de bride (22, 42, 51, 52, 53, 54) dans le deuxième type de perçages, en particulier pour atteindre une plus grande résistance à la torsion pour une même transmission et pour un couple de rotation transmissible maximal plus grand.

6. Kit selon au moins l'une quelconque des revendications 3 à 5,
**caractérisé en ce que**,
dans une première taille de construction, dans le cadre au moins d'une première variante
des boulons planétaires (5, 25, 35, 45) sont prévus dans le deuxième type de perçages et des boulons de bride (22, 42, 51, 52, 53, 54) dans le premier type de perçages,
et **en ce que**,
dans la même taille de construction, dans le cadre au moins d'une variante
des boulons planétaires (5, 25, 35, 45) sont prévus dans le premier type de perçages et des boulons de bride (22, 42, 51, 52, 53, 54) dans le deuxième type de perçages, en particulier pour atteindre une plus grande résistance à la torsion pour une même transmission et pour un couple de rotation transmissible maximal plus grand.

7. Kit selon au moins l'une quelconque des revendications précédentes,
**caractérisé en ce que**
la série comporte une première et une deuxième taille de construction,
la première taille de construction comportant une première variante avec des boulons planétaires (5, 25, 35, 45) dans un premier type de perçages et une deuxième variante avec des boulons planétaires (5, 25, 35, 45) dans un deuxième type de perçages,
et la deuxième taille de construction comportant au moins une troisième variante,
et le couple de rotation maximal transmissible de la deuxième variante ressemblant à celui de la troisième variante.

8. Kit selon au moins l'une quelconque des revendications précédentes,
**caractérisé en ce que**
la gradation des couples de rotation transmissibles au maximum de plusieurs variantes dans des tailles de construction est telle que le couple de rotation maximal transmissible d'une variante correspondante correspond au couple de rotation transmissible au maximum d'une variante d'une autre taille de construction respective.

9. Kit selon la revendication 1,
**caractérisé en ce que**
le premier rayon a1 est plus grand ou plus petit que le deuxième rayon a2.

10. Kit selon au moins une des revendications précédentes,
**caractérisé en ce que**
des douilles d'écartement emboîtées sur les boulons de bride (22, 42, 51, 52, 53, 54) sont prévues, lesquelles maintiennent les deux joues de bride écartées.

11. Kit selon au moins l'une quelconque des revendications précédentes,
**caractérisé en ce que**
le premier (32) et/ou le deuxième type (33) de perçages sont réalisés de manière excentrique.

12. Kit selon au moins l'une quelconque des revendications précédentes,
**caractérisé en ce que**
les planètes (3, 23, 43) sont placées avec leurs paliers afférents sur des douilles avec un perçage réalisé de manière excentrique, lesquelles sont emboîtées sur les boulons planétaires cylindriques (5, 25, 35, 45).

13. Kit selon au moins l'une quelconque des revendications précédentes,
**caractérisé en ce que**
des douilles emboîtées sur les boulons plus minces sont prévues, lesquelles sont utilisables ou amovibles pour adapter le diamètre en fonction de la variante, en particulier pour réaliser d'autres variantes en utilisant les mêmes composants comme les paliers pour planètes (3, 23, 43), les planètes, le soleil, la couronne de train planétaire, la cage de transmission planétaire (1, 21, 31, 41), les joues et les boulons, exception faite des douilles.

14. Kit selon au moins l'une quelconque des revendications précédentes,
**caractérisé en ce**
**qu'**à part le premier et le deuxième type de perçages, un ou plusieurs autres types de perçages sont prévus, en particulier avec différents diamètres et/ou différents rayons.

15. Kit selon au moins l'une quelconque des revendications précédentes,
**caractérisé en ce que**
les boulons planétaires sont reliés à la cage de transmission planétaire au moyen d'un ajustage serré, donc enfoncés dans un type de perçages.

16. Kit selon au moins l'une quelconque des revendications précédentes,
**caractérisé en ce que**
le premier type de perçages et un autre type de perçages, comme le deuxième type ou des types semblables, utilisent ensemble au moins un perçage, en particulier pour un même rayon respectivement affecté.

17. Cage de transmission planétaire pour une série d'engrenages planétaires selon la revendication 1,
**caractérisée en ce que**
la cage de transmission planétaire présente sur sa joue de bride (27, 38) un premier type (32) de perçages et un deuxième type (33) de perçages,
les perçages du premier type (32) étant disposés sur un premier cercle avec un premier rayon a1 par rapport à l'axe fictif de la cage de transmission planétaire (1, 21, 31, 41)
et les perçages du deuxième type (38) étant disposés sur un deuxième cercle avec un deuxième rayon a2 par rapport à l'axe fictif de la cage de transmission planétaire (1, 21, 31, 41).

18. Cage de transmission planétaire selon la revendication 17,
**caractérisée en ce que**
la cage de transmission planétaire peut être utilisée pour des étages d'engrenage planétaire à une joue et/ou à deux joues.

19. Cage de transmission planétaire selon au moins l'une quelconque des revendications précédentes,
**caractérisée en ce que**
dans un étage d'engrenage planétaire à une joue, le premier type de perçages ou le deuxième type de perçages sont dotés de boulons planétaires.

20. Cage de transmission planétaire selon au moins l'une quelconque des revendications précédentes,
**caractérisée en ce que**
dans un étage d'engrenage planétaire à deux joues, le premier type de perçages ou le deuxième type de perçages sont dotés de boulons planétaires, et **en ce que** l'autre type de perçages est respectivement occupé par des boulons de bride pour relier deux joues de bride.

21. Cage de transmission planétaire selon au moins l'une quelconque des revendications précédentes,
**caractérisée en ce que**
les évidements prévus pour accueillir les boulons planétaires dans les joues de bride sont réalisés sous forme de trous oblongs, lesquels sont orientés vers l'axe du soleil dans le sens radial.

22. Cage de transmission planétaire selon au moins l'une quelconque des revendications précédentes,
**caractérisée en ce que**
les boulons planétaires sont reliés à la cage de transmission planétaire au moyen d'un ajustage serré, donc enfoncés dans un type de perçages.

23. Entraînement,
comportant un moteur, en particulier un moteur électrique, et un engrenage,
**caractérisé en ce que**
l'engrenage est un étage à engrenage planétaire selon la revendication 1.

24. Entraînement selon la revendication 23,
**caractérisé en ce que**
l'entraînement est un entraînement asservi, en particulier un entraînement asservi à jeu réduit et résistant à la torsion.

25. Engrenage planétaire,
l'engrenage planétaire comportant un étage d'engrenage planétaire selon la revendication 1.
